# EUROPÄISCHE PATENTSCHRIFT

(11) **EP 1 488 684 B1**
(45) Veröffentlichungstag und Bekanntmachung des Hinweises auf die Patenterteilung: **29.11.2006**
(21) Anmeldenummer: 04014292.9
(22) Anmeldetag: 18.06.2004
(51) Int. Cl.: A01D 78/10, A01B 73/04

(54) **Heuwerbungsmaschine**
Haymaking machine
Machine de fenaison

(30) Priorität: 20.06.2003 DE 10327918
(43) Veröffentlichungstag der Anmeldung: 22.12.2004
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE); Afting, Andreas, Dipl.-Ing., 48488 Emsbüren (DE)

(56) Entgegenhaltungen:
- EP-A- 0 664 948
- DE-A- 19 820 930
- DE-C- 19 716 379
- US-A- 4 159 749

## Beschreibung

Die Erfindung bezieht sich auf eine Heuwerbungsmaschine, insbesondere zum Schwaden von landwirtschaftlichem Halmgut, mit vier umlaufend angetriebenen, über Stützräder auf dem Erdboden abstützbaren sowie über Ausleger aus einer Arbeits- und Betriebsstellung in eine verschwenkte Transportstellung überführbaren Kreiselrechen in in Fahrtrichtung im wesentlichen V-förmiger Anordnung.

Eine Heuwerbungsmaschine der vorgenannten Art ist beispielsweise aus der DE 197 16 379 C1 bekannt. Bei dieser Maschine sind vier Kreiselrechen vorgesehen, wobei jeweils zwei einander zugeordnete Kreiselrechen in Fahrtrichtung hintereinander angeordnet sind. Die beiden in Fahrtrichtung vorgeordneten Kreiselrechen bestimmen die maximale Arbeitsbreite und sind vor einer ungelenkten Maschinenachse gelegen. Zur Überführung in ihre Transportstellung sind die jeweiligen Kreiselrechen einwärts zu verschwenken. Die maximal mögliche Arbeitsbreite ist bei dieser Heuwerbungsmaschine gegenüber einer Heuwerbungsmaschine mit lediglich zwei Kreiselrechen deutlich erhöht, wird jedoch dem Wunsch nach noch größeren Arbeitsbreiten noch nicht gerecht, obgleich in der Transportstellung der Teile die Grenzen einer maximalen Transporthöhe schon erreicht sind.

Es ist daher Aufgabe der vorliegenden Erfindung, eine Heuwerbungsmaschine der eingangs genannten Art zu schaffen, mit der die wirksame Gesamtarbeitsbreite noch weiter zu erhöhen ist, bei der aber auch bei großen Arbeitsbreiten die maximal zulässigen Maße für die Straßenfahrt eines Fahrzeuges nicht überschritten werden.

Zur Lösung dieser Aufgabe zeichnet sich die Heuwerbungsmaschine der eingangs genannten Art dadurch aus, dass den Kreiselrechen zumindest ein weiterer, die maximale Arbeitsbreite vergrößernder und an einem Ende eines weiteren Auslegers befindlicher Kreiselrechen beigeordnet ist, wobei dieser weitere Ausleger mindestens vier Schwenkachsen aufweist, die den weiteren Ausleger in Teilausleger unterteilen, und wobei in Arbeitsstellung die Schwenkachsen in einer Ausrichtung auf die Maschinenlängsachse mit dieser einen in Fahrtrichtung offenen Winkel kleiner 45° dergestalt ausbilden, dass bei in Transportstellung verschwenkten Teilauslegern diese zumindest teilweise aufeinander faltbar sind.

Somit ist eine Heuwerbungsmaschine zur Verfügung gestellt, bei der die wirksame Gesamtarbeitsbreite noch weiter erhöht wurde, ohne die für die Straßenfahrt zulässigen Maße eines Fahrzeugs zu überschreiten. Damit dieses erreicht wird, ist den bisherigen vier umlaufend angetriebenen Kreiselrechen, welche an Auslegern befestigt sind, ein weiterer Ausleger mit mindestens vier Schwenkachsen zugeordnet, wobei die Schwenkachsen den Ausleger in mindestens drei Teilausleger unterteilen. Bei der erfindungsgemäßen Ausgestaltung dieser bei vier Schwenkachsen drei vorhandenen Teilausleger werden diese aus einer ausgeschwenkten Arbeitsstellung in eine Transportstellung eingeschwenkt. Durch den Dreifachklappvorgang, bei dem die in Arbeitsstellung in einer in etwa horizontalen Lage befindlichen Ausleger in eine vertikale Position verschwenkt werden, wird die maximal für die Straßenfahrt zulässige Gesamthöhe von 4 Metern nicht überschritten. Zum Erreichen einer maximalen Arbeitsbreite dürfen die Schwenkachsen mit der Maschinenlängsmittelachse nur einen kleinen Winkel aufweisen, da bei zu großen Winkeln die seitliche Erstreckung des weiteren Auslegers nicht zur Lösung der Aufgabe beiträgt.

Vorteilhafterweise ist die Heuwerbungsmaschine als selbstfahrende Heuwerbungsmaschine ausgebildet mit insgesamt zwei weiteren, in Fahrtrichtung vor den übrigen angeordneten Auslegern, welche endseitig angeordnete Kreiselrechen aufweisen. Durch die dreifache Klappbewegung um insgesamt etwa 270° werden die endseitig an den weiteren Auslegern angeordneten Kreiselrechen aus einer zum Boden horizontalen Arbeitsstellung in eine Transportposition verschwenkt, welche sich dadurch auszeichnet, dass die Zinken des Kreiselrechens zur vertikalen Längsmittelebene des Fahrzeugs gerichtet sind und somit nicht nach außen stehen. Damit wird für die Straßenfahrt eine erhöhte Sicherheit erreicht.

Bei dieser erfindungsgemäßen Ausgestaltung ist der in Arbeitsstellung am weitesten von der Längsmittelachse der Heuwerbungsmaschine entfernte Teilausleger in Winkelform mit einem zum Boden hin offenen Winkel ausgebildet. Dieser Winkel unterteilt den Teilausleger in zwei Teilauslegerteile, welche durch die Winkelseiten gebildet werden. Die Längen dieser Teilauslegerteile entsprechen dabei zum einen mindestens dem Radius des Kreiselrechens, zum anderen mindestens seiner vertikalen Erstreckung. Dieses bewirkt, dass sich beim Einschwenken des Auslegers der eine Teilauslegerteil an die in Arbeitsstellung oben befindliche Seite des Kreiselrechens anlegt, während der zweite Teilauslegerteil des winkelförmigen äußeren Teilauslegers sich an der zur Maschinenlängsachse weisenden Seite des Kreiselrechens anlegt. Der vom Teilausleger gebildete Winkel ist in diesem Fall mindestens 80 °, bevorzugtermassen 90°.

Durch diese erfindungsgemäße Umschließung des Kreiselrechens auf zwei Seiten, betrachtet aus einer vorderen Ansicht, und durch das weitere Einschwenken des Auslegers kommt der Kreiselrechen in eine fahrzeugseitige Transportstellung, bei der der Kreiselrechen von den Teilauslegern auf lediglich zwei Seiten umschlossen wird. Dieses bietet den großen Vorteil, dass bei vor einer Fahrerkabine einer selbstfahrenden Heuwerbungsmaschine angebrachten weiteren Auslegern deren Teilausleger nicht die Sicht des Fahrers versperren.

Hierbei ist weiterhin eine Schwenkachse, bevorzugterweise die zwischen Fahrzeugschassis und Teilausleger befindliche, dergestalt ausgebildet, dass sie eine beispielsweise durch den Untergrund gebildete Horizontale schneidet. Dadurch wird der weitere Kreiselrechen beim Verschwenken aus der Arbeits- und Betriebsstellung in die Transportstellung verstärkt entlang der Längsmittelachse der Heuwerbungsmaschine in Fahrtrichtung geführt. Der weitere Kreiselrechen, der für eine Kurvenfahrt in Arbeitsstellung dicht an dem in Fahrtrichtung hinter ihm befindlichen Kreiselrechen liegen muss, lässt sich so besser für eine Transportstellung vor der Fahrerkabine positionieren. Um eine für die Kurvenfahrt gute Überdeckung der in Fahrtrichtung hintereinander liegenden Kreiselrechen zu gewährleisten, kann der weitere Kreiselrechen so an den nachgeordneten Kreiselrechen heranreichen, dass der kürzeste Abstand zwischen dem weiteren Kreiselrechen und dem benachbarten Kreiselrechen in Arbeits- und Betriebsstellung 10 % bis 50% des Durchmessers des weiteren Kreiselrechens ist.

Weitere vorteilhafte Ausgestaltungen der Erfindung ergeben sich aus weiteren Unteransprüchen, der nachfolgenden Beschreibung und der Zeichnung. In der Zeichnung zeigen:
- Fig. 1: eine schematische Draufsicht auf eine Heuwerbungsmaschine nach der Erfindung,
- Fig. 2: eine teilweise Vorderansicht der Heuwerbungsmaschine nach Fig. 1 ohne die in Fahrtrichtung weiter hinten liegenden beiden Kreiselpaare,
- Fig. 3: eine teilweise Vorderansicht der Heuwerbungsmaschine nach Fig. 1 und 2 mit veränderter Arbeitsbreite,
- Fig. 4: eine teilweise Vorderansicht der Heuwerbungsmaschine nach den Fig. 1 bis 3 während des Einschwenkvorgangs, ohne dass der Kreiselrechen um einen Winkel verschwenkt wurde, bzw. in Vorgewendestellung,
- Fig. 5: eine teilweise Vorderansicht einer Heuwerbungsmaschine nach den Fig. 1 bis 4 während des Einschwenkvorgangs mit einem um geringfügig mehr als 90° verschwenktem Kreiselrechen,
- Fig. 6: eine teilweise Vorderansicht der Heuwerbungsmaschine nach den Fig. 1 bis 5 während des Einschwenkvorgangs mit einem um mehr als 180° verschwenkten Kreiselrechen,

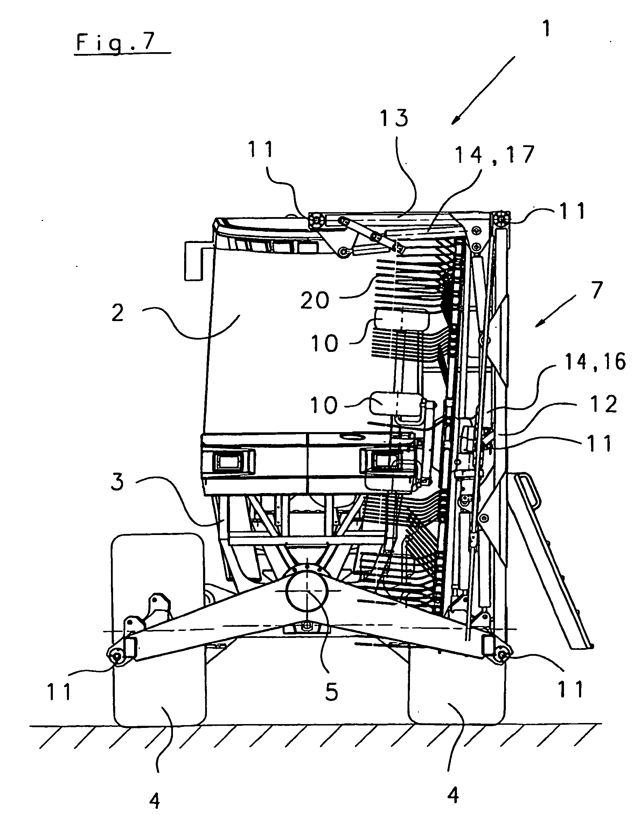

- Fig. 7: eine teilweise Vorderansicht einer Heuwerbungsmaschine nach den Fig. 1 bis 6 in Transportstellung.

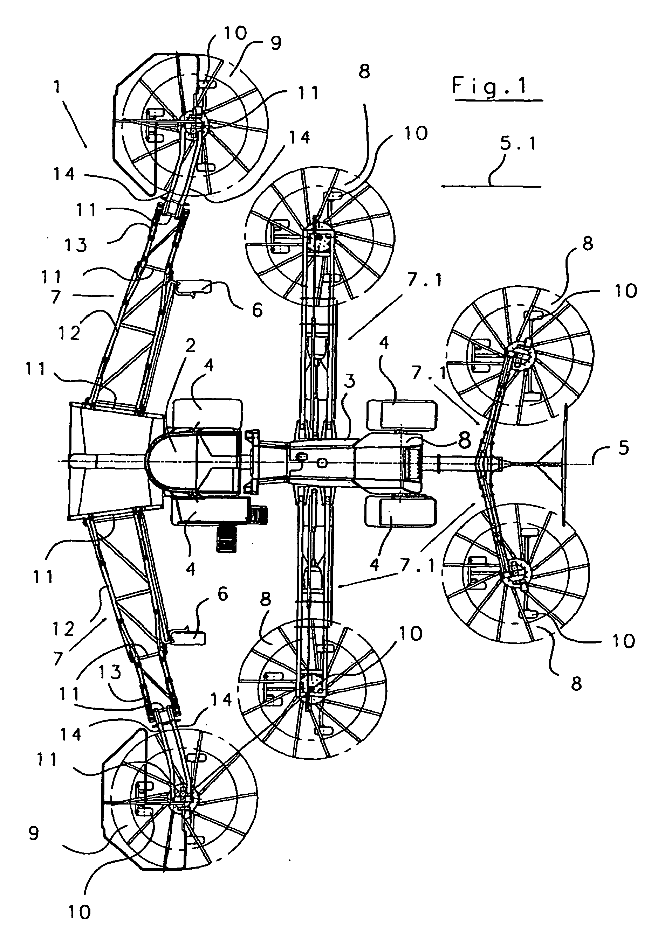

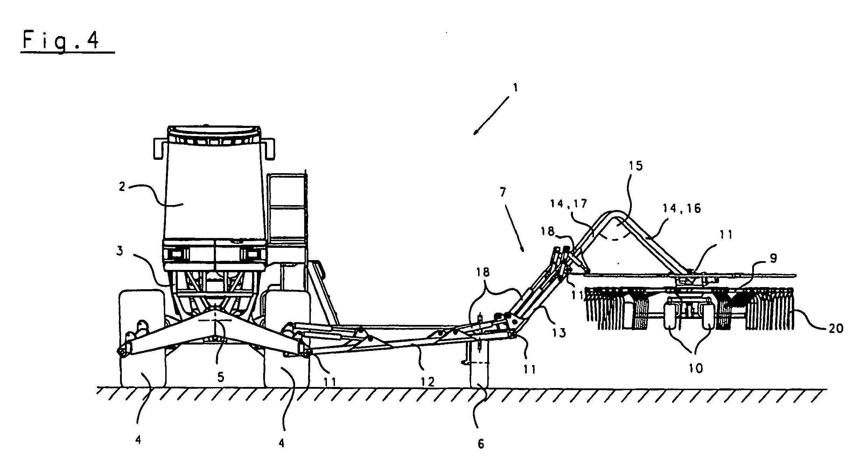

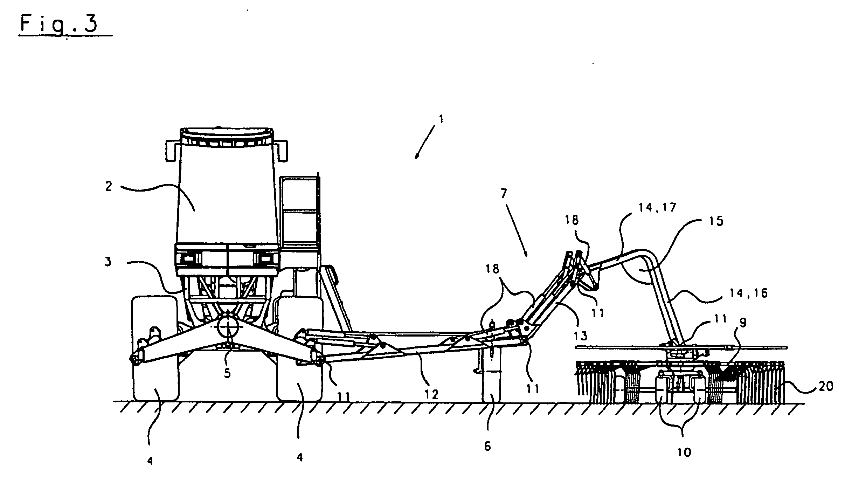

In der Zeichnung ist allgemein eine mit 1 bezifferte Heuwerbungsmaschine dargestellt, die als selbstfahrende Heuwerbungsmaschine ausgebildet ist. Diese selbstfahrende Heuwerbungsmaschine 1 zeigt in allen Figuren eine Fahrerkabine 2, ein Fahrzeugschassis 3, Laufräder 4 und eine Längsmittelachse 5, die in Fahrtrichtung 5.1 zeigt. Die in Fig. 1 gezeigte erfindungsgemäße Ausgestaltung einer Heuwerbemaschine 1 besitzt zwei weitere Stützräder 6, die die beiden weiteren, vorderen Ausleger 7 abstützen. Die beiden weiteren Ausleger 7 befinden sich in Fahrtrichtung 5.1 vor den aus dem Stand der Technik bekannten vier Auslegern 7.1. Diese Stützräder 6 sind notwendig, um die bei solch gewaltigen Arbeitsbreiten auftretenden Kräfte nicht direkt auf das Chassis 3 wirken zu lassen. Die bereits im Stand der Technik beschriebenen Kreiselrechen 8 sowie die beiden weiteren Kreiselrechen 9 sind mit Hilfe von bekannten Stützrädern 10 in Arbeitsstellung gegenüber dem Boden abgestützt. Insgesamt vier Schwenkachsen 11 des weiteren Auslegers 7 unterteilen den weiteren Ausleger 7 in drei Teilausleger 12, 13 und 14. Es versteht sich hierbei, dass die Teilausleger 12, 13 und 14 sowie der weitere Ausleger 7 nicht aus einem einzigen Stück in Form eines Trägers oder ähnlichem bestehen müssen, sondern dass es sich auch um eine beispielsweise in Fig. 1 dargestellte Rahmenrohrkonstruktion handeln kann.

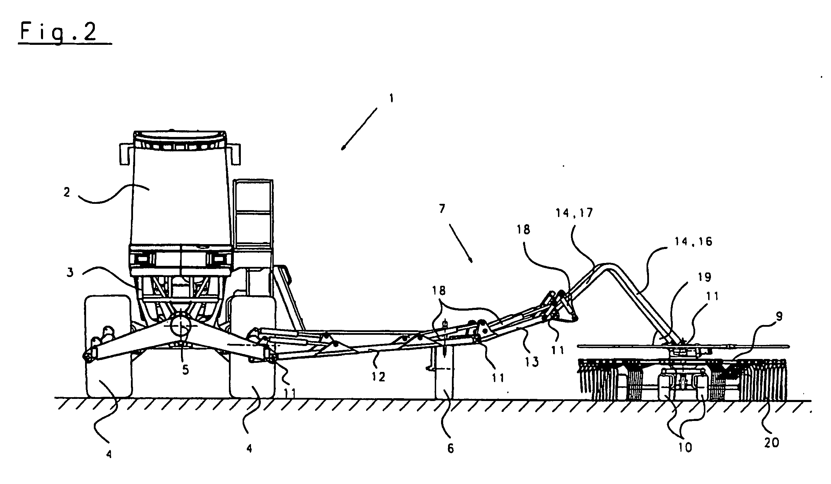

Fig. 2 zeigt die erfindungsgemäße Winkelform eines Teilauslegers 14 des weiteren Auslegers 7. Der bevorzugtermassen in einem Winkel von 90° ausgebildete Winkel 15 unterteilt die Teilausleger 14 in zwei Teilauslegerteile 16 und 17. Die Längserstreckung dieser Teilauslegerteile 17 und 16 ergibt sich aus den Maßen des weiteren Kreiselrechens 9. Das Teilauslegerteil 16 ist mindestens geringfügig größer als der halbe Durchmesser des Kreiselrechens 9, wenn dieser sich in seiner horizontalen Lage befindet. Der Teilauslegerteil 17 weist eine Längserstreckung auf, die mindestens der Höhe des Kreiselrechens 9 entspricht. Die damit vorhandenen Vorteile werden ausführlich weiter unten beschrieben.

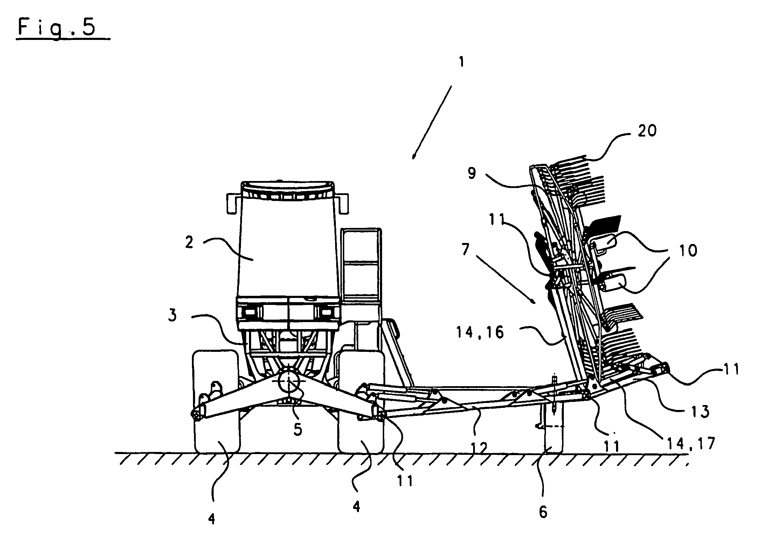

Mit Hilfe von hier nicht näher beschriebenen Stellmitteln 18 lassen sich die Winkel der Teilausleger 12, 13 und 14 relativ zueinander verändern. Dieses führt zu einer Veränderung der Arbeitsbreite des weiteren Kreiselrechens 9, was ein Vergleich der Figuren 2 und 3 verdeutlicht.

Für den Einschwenkvorgang ist es bei der erfindungsgemäßen Heuwerbungsmaschine des weiteren von großem Vorteil, dass die Längserstreckung des Teilauslegers 13 mindestens der Längserstreckung des Teilauslegerteils 17 entspricht. Während des Beginns des in Fig. 4 dargestellten Einschwenkvorgangs des Kreiselrechens 9 des weiteren Auslegers 7, der gleichzeitig auch die Vorgewendestellung darstellt, wird der Teilauslegerteil 14 um die zwischen dem Teilauslegerteil 17 und dem Teilausleger 13 befindliche Schwenkachse 11 je nach vorheriger Arbeitsposition um möglicherweise mehr als 180° verschwenkt, so dass der Teilauslegerteil 17 in etwa parallel zum Teilausleger 13 verbracht wird und in diesen je nach Ausführungsform der Erfindung möglicherweise eingreift.

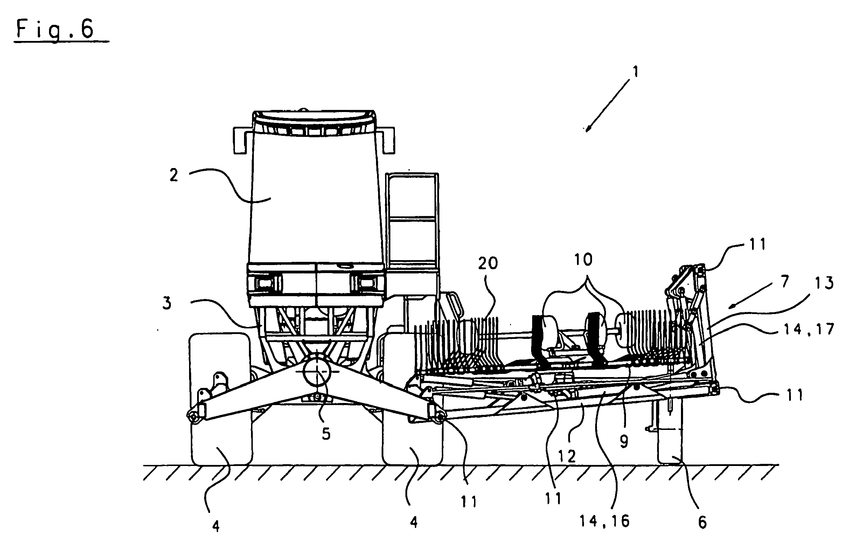

In einem vorher, gleichzeitig oder danach folgendem Schritt wird der zwischen dem Teilauslegerteil 16 und dem weiteren Kreiselrechen 9 vorhandene Winkel 19 auf in etwa 0° reduziert, so dass der weitere Kreiselrechen 9 auf zwei Seiten von dem Teilausleger 14 umgriffen wird. Der in Fig. 5 dargestellte Abschnitt der Einschwenkbewegung des Kreiselrechens 9, bzw. des weiteren Auslegers 7, zeigt 5 einen bereits um mehr als 90° gegenüber der Arbeitsstellung verschwenkten weiteren Kreiselrechen 9. Dieser wird nun in einem nächsten Schritt auf den Teilausleger 12 aufgeklappt, so dass der Kreiselrechen 9, wie in Fig. 6 dargestellt, bereits um etwa 180° gedreht wurde.

In der erfindungsgemäßen Ausführungsform der Heuwerbungsmaschine entspricht die Länge des Teilauslegers 12 in etwa dem Durchmesser des Kreiselrechens. So wird die maximale seitliche Erstreckung des weiteren Auslegers 7 bereits auf eine Abmessung in etwa der Größe des Kreiseldurchmessers reduziert. In einem letzten Schritt der Einschwenkbewegung wird der Teilausleger 12 mit samt der übrigen Teile des Auslegers 7 um die zwischen Fahrzeugschassis 3 und Teilausleger 12 befindliche Schwenkachse 11 um in etwa 90° eingeschwenkt, so dass der Kreiselrechen 9 nun um insgesamt etwa 270° gedreht wurde. Bei dieser erfindungsgemäßen Ausführungsform eines Auslegers zeigen die Zinken 20 des Kreiselrechens zur vertikalen Längsmittelebene hin, ohne diese jedoch zu überschneiden. Vielmehr lassen die Zinken und die den Kreiselrechen nach oben und seitlich der Heuwebungsmaschine begrenzenden Teilausleger (12,13,14) einen beträchtlichen Teil des Sichtfeldes des in der Fahrerkabine 2 befindlichen Fahrers der Heuwerbungsmaschine 1 frei, was für eine Straßenfahrtzulassung notwendige Voraussetzung ist.

Die somit geschaffene Heuwerbungsmaschine 1 nach der Erfindung besitzt eine maximale Arbeitsbreite, bei noch immer für die Straßenfahrt zulässigen Außenabmessungen.

## Patentansprüche

1. Heuwerbungsmaschine, insbesondere zum Schwaden von landwirtschaftlichem Halmgut, mit vier umlaufend angetriebenen und über Stützräder auf dem Erdboden abstützbaren sowie über Ausleger aus einer Arbeitsstellung in eine verschwenkte Transportstellung überführbaren Kreiselrechen in in Fahrtrichtung im wesentlichen V-förmiger Anordnung, **dadurch gekennzeichnet, dass** den Kreiselrechen (8) zumindest ein weiterer, die maximale Arbeitsbreite vergrößemder und an einem Ende eines weiteren Auslegers (7) befindlicher Kreiselrechen (9) beigeordnet ist, wobei der weitere Ausleger (7) mindestens vier den weiteren Ausleger (7) in Teilausleger unterteilende Schwenkachsen (11) aufweist, wobei in Arbeitsstellung die Schwenkachsen (11) mit der Längsmittelachse (5) der Heuwerbungsmaschine (1) einen in Fahrtrichtung (5.1) offenen Winkel kleiner 45° dergestalt ausbilden, dass bei in Transportstellung verschwenkten Teilauslegern (12, 13, 14) diese zumindest teilweise aufeinander faltbar sind.

2. Heuwerbungsmaschine nach Anspruch 1, **dadurch gekennzeichnet, dass** zumindest eine der Schwenkachsen (11) zum Vergrößern der Arbeitsbreite im wesentlichen horizontal ausgebildet ist.

3. Heuwerbungsmaschine nach einem der Ansprüche 1 oder 2, **dadurch gekennzeichnet, dass** zumindest eine der Schwenkachsen (11) zur Verschwenkung des weiteren Kreiselrechens (9) entlang der Längsmittelachse der Heuwerbungsmaschine (1) zwischen Arbeits- und Betriebsstellung und Transportstellung eine Horizontale schneidet.

4. Heuwerbungsmaschine nach einem der Ansprüche 1 bis 3, **dadurch gekennzeichnet, dass** die Teilausleger (12, 13, 14) in Transportstellung zumindest teilweise ineinander eingreifen.

5. Heuwerbungsmaschine nach Anspruch 1 bis 4, **dadurch gekennzeichnet, dass** die Heuwerbungsmaschine (1) als selbstfahrende Heuwerbungsmaschine ausgebildet ist.

6. Heuwerbungsmaschine nach einem der Ansprüche 1 bis 5, **dadurch gekennzeichnet, dass** einer der Teilausleger (12, 13, 14) eine in Arbeitsstellung zum Boden hin gerichtete, offene Winkelform aufweist mit einem Winkel (15) größer gleich 80°, wobei der Winkel (15) den Teilausleger (14) in Teilauslegerteile (16, 17) unterteilt.

7. Heuwerbungsmaschine nach einem der Ansprüche 1 bis 6, **dadurch gekennzeichnet, dass** der die Winkelform ausbildende Teilausleger (14) eine weitere Schwenkachse aufweist, welche den Teilausleger (14) in die Teilauslegerteile (16, 17) unterteilt, wobei die an dieser Schwenkachse anliegenden Teilauslegerteile (16, 17) mit Stellmitteln zum Verstellen des Winkels (15) verbunden sind.

8. Heuwerbungsmaschine nach einem der Ansprüche 6 oder 7, **dadurch gekennzeichnet, dass** der am weiteren Kreiselrechen (9) anliegende Teilausleger (14) die Winkelform aufweist und in Transportstellung ein Teilauslegerteil (16) in etwa parallel zur in Transportstellung vertikalen Erstreckung des weiteren Kreiselrechens (9) angeordnet ist, wobei die Länge des Teilauslegerteils (16) mindestens größer der Hälfte dieser vertikalen Erstreckung ist.

9. Heuwerbungsmaschine nach einem der Ansprüche 6 bis 8, **dadurch gekennzeichnet, dass** das andere Teilauslegerteil (17) in Transportstellung in etwa parallel zur in Transportstellung horizontalen Erstreckung des weiteren Kreiselrechens (9) angeordnet ist, wobei die Länge des Teilauslegerteils (17) mindestens gleich dieser horizontalen Erstreckung in Transportstellung ist.

10. Heuwerbungsmaschine nach einem der Ansprüche 1 bis 9, **dadurch gekennzeichnet, dass** der weitere Kreiselrechen (9) aus seiner Arbeitsposition um in etwa 270° in seine Transportposition verschwenkt wird.

11. Heuwerbungsmaschine nach einem der Ansprüche 1 bis 10, **dadurch gekennzeichnet, dass** in Transportstellung in einer Vorderansicht die Teilausleger (12, 13, 14) den weiteren Kreiselrechen (9) auf zwei Seiten begrenzen.

12. Heuwerbungsmaschine nach einem der Ansprüche 1 bis 11, **dadurch gekennzeichnet, dass** die beiden in Arbeitsstellung äußeren Teilausleger(13, 14) zur Längenveränderung des weiteren Auslegers (7) mit Stellmitteln in unterschiedliche Winkel zueinander positionierbar gehalten sind.

13. Heuwerbungsmaschine nach einem der Ansprüche 1 bis 12, **dadurch gekennzeichnet, dass** der weitere Ausleger (7) über ein dem in Arbeitsstellung der Längsmittelachse (5) am nächsten kommenden Teilausleger (12) zugeordnetes Stützrad (6) gegenüber dem Boden abstützbar ist.

14. Heuwerbungsmaschine nach einem der Ansprüche 1 bis 13, **dadurch gekennzeichnet, dass** der als selbstfahrende Heuwerbungsmaschine ausgebildeten Heuwerbungsmaschine (1) insgesamt zwei weitere Kreiselrechen (9) in Fahrtrichtung (5.1) vor den übrigen Auslegern (7.1) mit endseitig angeordneten Kreiselrechen (8) vorgeordnet sind, wobei die weiteren Kreiselrechen (9) durch die Verschwenkung von insgesamt etwa 270° um die Schwenkachsen (11) aus einer Transportstellung in eine Arbeitsstellung und zurück verschwenkbar ausgeführt sind, wobei an den weiteren Kreiselrechen (9) befindliche Zinken (20) zur Heuwerbung in Transportstellung zur vertikalen Längsmittelebene der Heuwerbungsmaschine (1) gerichtet sind.

15. Heuwerbungsmaschine nach einem der Ansprüche 1 bis 14, **dadurch gekennzeichnet, dass** der kürzeste Abstand zwischen dem weiteren Kreiselrechen (9) und dem benachbarten Kreiselrechen (8) 10 % bis 50 % des Durchmessers des weiteren Kreiselrechens (9) beträgt.

16. Landwirtschaftliche Nutzmaschine, insbesondere zur Heuwerbung, mit einem an einem Ausleger endseitig befestigtem Arbeitsaggregat, **dadurch gekennzeichnet, dass** der Ausleger mindestens vier horizontale, diesen in Teilausleger unterteilende Schwenkachsen (11) aufweist, wobei in Arbeitsstellung die Schwenkachsen (11) in einer Ausrichtung auf die Maschinenlängsmittelachse (5) mit dieser einen in Fahrtrichtung (5.1) offenen Winkel kleiner 45° dergestalt ausbilden, dass bei in Transportstellung verschwenkten Teilauslegem (12, 13, 14) diese zumindest teilweise aufeinander faltbar sind, wobei das Arbeitsaggregat durch die Verschwenkung um die Schwenkachsen (11) um 270° aus einer Transportstellung in eine Arbeitsstellung und zurück verschwenkbar ausgeführt ist und wobei der am Arbeitsaggregat anliegende Teilausleger (14) eine Winkelform mit einem zum Boden hin offenen Winkel (15) aufweist, der den Teilausleger (14) in Teilauslegerteile (16, 17) unterteilt und in Transportstellung ein Teilauslegerteil (17) in etwa parallel zur vertikalen Erstreckung des Arbeitsaggregates angeordnet ist, wobei die Länge des Teilauslegerteils (17) mindestens gleich dieser vertikalen Erstreckung ist.

## Claims

1. Haymaking machine, particularly for windrowing stalked agricultural crops, having four rotary rakes in a substantially V-shaped arrangement in the direction of travel, which rotary rakes are driven in rotation, are able to be supported on the ground by means of supporting wheels and are able to be transferred from a working position to a pivoted position for transport by means of booms, **characterised in that** the rotary rakes (8) have associated with them at least one further rotary rake (9) which increases the maximum working width and is situated at one end of a further boom (7), the further boom (7) having at least four axes of pivot (11) which divide the further boom (7) into sub-booms, the axes of pivot (11) forming, in the working position, with the longitudinal centre axis (5) of the haymaking machine (1), an angle of less than 45° which is open in the direction of travel (5.1), in such a way that, when the sub-booms (12, 13, 14) are pivoted into the position for transport, at least some of them can be folded onto one another.

2. Haymaking machine according to claim 1, **characterised in that**, to increase the working width, at least one of the axes of pivot (11) is arranged substantially horizontally.

3. Haymaking machine according to either of claims 1 and 2, **characterised in that***,* to allow the further rotary rake (9) to be pivoted around the longitudinal centre axis of the haymaking machine (1) between a working and operating position and a position for transport, at least one of the axes of pivot (11) intersects a horizontal line.

4. Haymaking machine according to one of claims 1 to 3, **characterised in that** at least some of the sub-booms (12, 13, 14) interengage in one another in the position for transport.

5. Haymaking machine according to claims 1 to 4, **characterised in that** the haymaking machine (1) is in the form of a self-propelled haymaking machine.

6. Haymaking machine according to one of claims 1 to 5, **characterised in that** one of the sub-booms (12, 13, 14) is of an open angled shape which is directed towards the ground in the working position and whose angle (15) is equal to or more than 80°, the angle (15) dividing the sub-boom (14) into sub-boom parts (16, 17).

7. Haymaking machine according to one of claims 1 to 6, **characterised in that** the sub-boom (14) which forms the angled shape has a further axis of pivot which divides the sub-boom (14) into the sub-boom parts (16, 17), the sub-boom parts (16, 17) adjacent this axis of pivot being connected to positioning means for adjusting the angle (15).

8. Haymaking machine according to either of claims 6 and 7, **characterised in that** the sub-boom (14) adjacent the further rotary rake (9) is of the angled shape and, in the position for transport, one sub-boom part (16) is arranged approximately parallel to that dimension of the further rotary rake (9) which is vertical in the position for transport, the length of the sub-boom part (16) being at least more than half the said vertical dimension.

9. Haymaking machine according to one of claims 6 to 8, **characterised in that**, in the position for transport, the other sub-boom part (17) is arranged approximately parallel to that dimension of the further rotary rake (9) which is horizontal in the position for transport, the length of the sub-boom part (17) being at least equal to the said dimension in the position for transport.

10. Haymaking machine according to one of claims 1 to 9, **characterised in that** the further rotary rake (9) is pivoted through approximately 270° from its working position to its position for transport.

11. Haymaking machine according to one of claims 1 to 10, **characterised in that** in the position for transport, when seen from the front, the sub-booms (12, 13, 14) form boundaries of the further rotary rake (9) on two sides.

12. Haymaking machine according to one of claims 1 to 11, **characterised in that**, to allow the length of the further boom (7) to be varied, the two sub-booms (13, 14) which are on the outside in the working position are held in such a way as to be positionable at different angles relative to one another by positioning means.

13. Haymaking machine according to one of claims 1 to 12, **characterised in that** the further boom (7) can be supported relative to the ground by means of a supporting wheel (6) which is associated with that sub-boom (12) which is closest to the longitudinal centre axis (5) in the working position.

14. Haymaking machine according to one of claims 1 to 13, **characterised in that** the haymaking machine (1), which takes the form of a self-propelled haymaking machine, has positioned in front of it a total of two further rotary rakes (9) situated, in the direction of travel (5.1), in front of the other booms (7.1) having rotary rakes (8) arranged at the ends, the further rotary rakes (9) being designed to be pivotable from a position for transport to a working position, and back, by being pivoted through a total of approximately 270° about the axes of pivot (11), tines (20) for haymaking situated on the further rotary rakes (9) being directed towards the vertical longitudinal plane of the haymaking machine (1) in the position for transport.

15. Haymaking machine according to one of claims 1 to 14, **characterised in that** the shortest distance between the further rotary rake (9) and the adjacent rotary rake (8) is 10% to 50% of the diameter of the further rotary rake (9).

16. Machine for agricultural use, particularly for haymaking, having a working assembly fastened to an end of a boom, **characterised in that** the boom has at least four horizontal axes of pivot (11) which divide the boom into sub-booms, the axes of pivot (11) forming with the longitudinal centre axis (5) of the machine, in the working position, in the direction towards the said longitudinal centre axis (5), an angle of less than 45° which is open in the direction of travel (5.1), in such a way that when the sub-booms (12, 13, 14) are pivoted into the position for transport, at least some of them can be folded onto one another, the working assembly being designed to be able to be pivoted from a position for transport to a working position, and back, by being pivoted through 270° about the axes of pivot (11), and that sub-boom (14) which is adjacent the working assembly being of an angled shape whose angle (15) is open towards the ground and divides the sub-boom (14) into sub-boom parts (16, 17), and in the position for transport one sub-boom part (17) being arranged approximately parallel to the vertical dimension of the working assembly, the length of the sub-boom part (17) being at least equal to the said vertical dimension.

## Revendications

1. Machine de fenaison notamment pour andainer des produits agricoles en tige, comportant quatre rotors râteleurs entraînés en rotation et s'appuyant sur le sol par l'intermédiaire de roues de sustentation, suivant une disposition principalement en forme de V dans la direction de déplacement, pour être transférés par des flèches à partir d'une position de travail dans une position de transport basculée,
**caractérisée en ce qu'**
aux rotors râteleurs (8) est associé au moins un autre rotor râteleur (9) augmentant la largeur maximale de travail, ce rotor étant prévu à l'extrémité d'une autre flèche (7),
cette autre flèche (7) ayant au moins quatre axes de basculement (11) qui la subdivise en des parties de flèche, et
en position de travail, les axes de basculement (11) font avec l'axe longitudinal central (5) de la machine de fenaison (1), un angle ouvert dans la direction de déplacement (5.1), cet angle étant inférieur à 45° de façon que les parties de flèche (12, 13, 14) basculées en position de transport, puissent être repliées au moins partiellement l'une au-dessus de l'autre.

2. Machine de fenaison selon la revendication 1,
**caractérisée en ce qu'**
au moins l'un des axes de basculement (11) est pratiquement horizontal pour augmenter la largeur de travail.

3. Machine de fenaison selon l'une des revendications 1 ou 2,
**caractérisée en ce qu'**
au moins l'un des axes de basculement (11), servant à basculer l'autre rotor râteleur (9) suivant l'axe longitudinal médian de la machine de fenaison (1) entre la position active et de fonction et la position de transport, coupe une ligne horizontale.

4. Machine de fenaison selon l'une des revendications 1 à 3,
**caractérisée en ce que**
les parties de flèche (12, 13, 14) se chevauchent au moins partiellement en position de transport.

5. Machine de fenaison selon l'une des revendications 1 à 4,
**caractérisée en ce que**
la machine de fenaison (1) est une machine automotrice.

6. Machine de fenaison selon l'une des revendications 1 à 5,
**caractérisée en ce que**
l'une des parties de flèche (12, 13, 14) présente en position de travail une forme d'angle ouvert dirigé vers le sol, cet angle (15) ≥ 80° subdivise la partie de flèche (14) en des parties (16, 17).

7. Machine de fenaison selon l'une quelconque des revendications 1 à 6,
**caractérisée en ce que**
la partie de flèche (14) de forme coudée, comporte un autre axe de basculement qui subdivise la partie de flèche (14) en partie de flèche (16, 17), les parties de flèche (16, 17) appliquées contre cet axe de basculement, étant reliées à des moyens pour régler l'angle (15).

8. Machine de fenaison selon l'une des revendications 6 ou 7,
**caractérisée en ce que**
la partie de flèche (14) appliquée contre l'autre rotor râteleur (9) présente une forme coudée et en position de transport cette partie se trouve dans une partie de flèche (16) sensiblement parallèle à la position de transport, en extension verticale de l'autre rotor râteleur (9), la longueur de la partie de flèche (16) étant au moins plus grande que la moitié de son extension verticale.

9. Machine de fenaison selon l'une des revendications 6 à 8,
**caractérisée en ce que**
l'autre partie de flèche (17), en position de transport, est sensiblement parallèle à l'extension horizontale en position de transport de l'autre rotor râteleur (9), la longueur de la partie de flèche (17) étant au moins égale à cette extension horizontale en position de transport.

10. Machine de fenaison selon l'une des revendications 1 à 9,
**caractérisée en ce que**
l'autre rotor râteleur (9) peut basculer à partir de sa position de travail dans sa position de transport sur environ 270°.

11. Machine de fenaison selon l'une des revendications 1 à 10,
**caractérisée en ce qu'**
en position de transport, en vue de face, les parties de flèche (12, 13, 14) délimitent des deux côtés l'autre rotor râteleur (9).

12. Machine de fenaison selon l'une des revendications 1 à 11,
**caractérisée en ce que**
les deux parties de flèche (13, 14) extérieures en position de travail, sont conçues pour permettre une variation de longueur de l'autre flèche (7) avec des moyens de réglage permettant de positionner différemment les angles.

13. Machine de fenaison selon l'une des revendications 1 à 12,
**caractérisée en ce que**
l'autre flèche (7) s'appuie contre le sol par l'intermédiaire d'une roue de sustentation (6) associée à la partie de flèche (12) la plus proche de l'axe longitudinal médian (5) en position de travail.

14. Machine de fenaison selon l'une des revendications 1 à 13,
**caractérisée en ce que**
la machine de fenaison (1) est une machine automotrice comportant en tout, deux autres flèches en amont dans la direction de déplacement (5.1), des flèches (7.1) munies des rotors râteleurs (8) en extrémité, les autres rotors râteleurs (9) pouvant être transférés par basculement sur environ 270° autour des axes de basculement (11), d'une position de transport vers une position de travail et inversement, et
les dents (20) de ramassage de ces autres rotors râteleurs (9), étant dirigées en position de transport, dans le plan longitudinal médian de la machine (1).

15. Machine de fenaison selon l'une des revendications 1 à 14,
**caractérisée en ce que**
la distance la plus courte entre l'autre rotor râteleur (9) et le rotor râteleur voisin (8) représente entre 10 % et 50 % du diamètre de l'autre rotor râteleur (9).

16. Machine à usage agricole notamment pour la fenaison comprenant un équipement de travail fixé à l'extrémité d'une flèche,
**caractérisée en ce que**
la flèche comporte au moins quatre axes de basculement (11) la divisant en parties de flèche, et en position de travail, suivant l'alignement par rapport à l'axe longitudinal médian (5) de la machine, les axes de basculement (11) font avec la direction de déplacement (5.1), un angle ouvert inférieur à 45° de façon que les parties de flèche (12, 13, 14) basculées en position de transport, puissent être au moins partiellement repliées, l'équipement de travail étant basculé autour de l'axe de basculement (11), de 270° à partir de sa position de transport dans sa position de travail et inversement, et la partie de flèche (14) adjacente à l'équipement présente une forme angulaire avec un angle (15) ouvert en direction du sol qui subdivise la partie de flèche (14) en des parties (16, 17) et en position de transport, une partie de flèche (17) est sensiblement parallèle à l'extension verticale de l'équipement de travail, la longueur de la partie de flèche (17) étant au moins égale à cette extension verticale.
